# EUROPÄISCHE PATENTANMELDUNG

(11) **EP 1 610 194 A2**
(43) Veröffentlichungstag der Anmeldung: **28.12.2005**
(21) Anmeldenummer: 05105517.6
(22) Anmeldetag: 22.06.2005
(51) Int. Cl.: G05B 19/042, G06F 17/60

(54) **Verfahren und System zur kontextsensitiven Bereitstellung von Produktinformationen**

(30) Priorität: 24.06.2004 DE 102004030533
(71) Anmelder: SIEMENS AKTIENGESELLSCHAFT, 80333 München (DE)
(72) Erfinder: Hamadou, Mehdi, 91052, Erlangen (DE); Jahn, Dirk, 91056, Erlangen (DE); Lescher, Marco, 52064, Aachen (DE)

(57) **Zusammenfassung**

Die Erfindung betrifft ein Verfahren und ein System zur kontextsensitiven Bereitstellung von auf einem oder mehreren Datenverarbeitungssystemen abgelegten Produktinformationen für einen Anwender. Um dem Anwender eines Produktes, beispielsweise einer technischen Anlage, automatisch die für ihn in Bezug auf seine aktuelle Arbeitssituation relevanten Produktinformationen zur Verfügung zu stellen wird ein Verfahren vorgeschlagen, bei dem in einem strukturierten Informationsmodell (2) den aktuellen Kontext einer vom Anwender angeforderten Information betreffende Gegenstandsbegriffe (4) automatisch gesucht werden, wobei die Gegenstandsbegriffe (4) innerhalb des Informationsmodells (2) zumindest teilweise über Relationen (3) miteinander verknüpft sind und wobei die Gegenstandsbegriffe (4) zumindest teilweise mit Referenzen (5) verknüpft sind, mit deren Hilfe die in dem aktuellen Kontext für den Anwender relevanten Produktinformationen (6) auf dem Datenverarbeitungssystem (1) adressiert und dem Anwender zur Verfügung gestellt werden.

## Beschreibung

Die Erfindung betrifft ein Verfahren zur kontextsensitiven Bereitstellung von auf einem oder mehreren Datenverarbeitungssystemen abgelegten Produktinformationen für einen Anwender.

Ein derartiges Verfahren bzw. System kommt beispielsweise bei der Bedienung von technischen Anlagen und Maschinen sowie für Wartungs- und Reparaturzwecke zum Einsatz.

Durch die zunehmende Globalisierung gehen viele Unternehmen gegenwärtig dazu über, Produktionsstätten in den Märkten zu errichten, in denen sie ihre Produkte absetzen. Dabei nimmt die Komplexität der gelieferten Produkte ständig zu und stellt an das Personal fortlaufend steigende Anforderungen hinsichtlich der Bedienung und Wartung der Produkte sowie bei Service- und Diagnosetätigkeiten. Zur Durchführung dieser Aktionen muss das Personal auf eine Vielzahl unterschiedlicher Dokumentationsmittel zugreifen, die im Allgemeinen unabhängig voneinander erstellt wurden und u. U. redundante oder sogar inkonsistente Informationen aufweisen.

Um diese Informationsmengen zu beherrschen, werden Produktdokumentationen heute statt in Form von Papier oft in Softwareform bereitgestellt.

Aus DE 198 34 456 A1 ist ein System und ein Verfahren bekannt zur dynamischen Verwaltung von Informationsdaten einer aus mehreren virtuellen Teilkomponenten bestehenden virtuellen Vorrichtung. Die virtuelle Vorrichtung ist das Abbild einer realen Vorrichtung, beispielsweise einer Industrieanlage. Ein umfassender Überblick über die Gesamtvorrichtung sowie ein zielgerichteter Einblick in die Teilkomponenten der Vorrichtung werden dadurch ermöglicht, dass die virtuellen Teilkomponenten entsprechend der technologischen Strukturen als Programme in einer vernetzten Rahmenstruktur eingebettet sind. Das System weist eine Datenverarbeitungsvorrichtung zur Verwaltung der der virtuellen Vorrichtung zugeordneten Informationsdaten und zur Steuerung des Zugriffs auf die Informationsquellen auf.

Der Erfindung liegt die Aufgabe zu Grunde, dem Anwender eines Produktes, beispielsweise einer technischen Anlage, automatisch die für ihn in Bezug auf seine aktuelle Arbeitssituation relevanten Produktinformationen zur Verfügung zu stellen.

Diese Aufgabe wird durch ein Verfahren nach Anspruch 1 gelöst.

Diese Aufgabe wird weiterhin durch ein System nach Anspruch 4 gelöst.

Bei dem erfindungsgemäßen Verfahren werden durch zusätzliche Informationen (so genannten Metadaten) angereicherte Verweise auf die Produktinformationen in dem strukturierten Informationsmodell hinterlegt. Die Produktinformationen selbst können sich auf beliebigen ggf. auch externen Datenverarbeitungssystemen befinden. Dabei wird ein automatisches Auffinden der u. U. auf verschiedenen Datenverarbeitungssystemen gespeicherten relevanten Produktinformationen dadurch ermöglicht, dass das Informationsmodell in Form eines semantischen Netzes, das auf einer firmenweiten Ontologie basiert, aufgebaut ist. In diesem semantischen Netz werden Gegenstandsbegriffe abgelegt, die über Relationen miteinander verknüpft sind. Die Ontologie definiert hierbei die domänenspezifischen Gegenstandsbegriffe sowie deren Relationen untereinander.

Durch das erfindungsgemäße Verfahren können dem Anwender aus einer Vielzahl von Produktinformationen die für ihn in einer speziellen Arbeitssituation relevanten Informationen automatisch selektiert werden. Ein sehr zeit- und ressourcenaufwendiges manuelles Zusammensuchen der relevanten Informationen durch den Anwender kann somit entfallen.

In bestimmten Arbeitssituationen benötigt der Anwender eine Vielzahl verschiedener Informationsmittel wie z. B. Konstruktionspläne, Zeichnungen, Stücklisten, Montageanleitungen, Installationspläne, Stromlaufpläne, Hard- und Softwaredokumentation aber auch Erfahrungswissen. Die Aufgabenteilung bei der Erstellung entsprechender Dokumente ist klar funktional geregelt, so dass ein Konstrukteur eine Fertigungszeichnung bzw. eine Montagezeichnung/-anleitung erzeugt, wohingegen eine Dokumentationsabteilung die Bedienungs-/Wartungsanleitungen etc. erzeugt. Diese monolithischen Dokumente sind rein für die Aufgabe konzipiert und entsprechen nicht den in den späteren Produktlebenszyklen, wie z.B. dem Service, dem Bedienen und Beobachten etc. benötigten Formen und Granularitäten.

Der Vorteil des erfindungsgemäßen Verfahrens liegt darin, dass nicht für jede denkbare Arbeitssituation ein notwendiger Arbeitsablauf initial in einem eigenen Dokumenten und Format erstellt werden muss. Vielmehr werden erst zur Laufzeit die entsprechenden Informationen über das Informationsmodell selektiert, um anschließend eine geeignete Handlungsanweisung (Task Flow) aus Teildokumenten zusammenzustellen. Dies hat den entscheidenden Vorteil, dass nicht jede Arbeitssituation im Voraus vorgedacht werden muss, um einen entsprechenden Task Flow zu generieren. Weiterhin ist bei dem erfindungsgemäßen Verfahren sichergestellt, dass die benötigten Informationen nicht redundant oder sogar inkonsistent bereitgestellt werden.

Ein weiterer Vorteil des erfindungsgemäßen Verfahrens ergibt sich aus der Tatsache, dass nicht die eigentlichen Produktinformationen in dem Informationsmodell hinterlegt sind, sondern lediglich Verweise auf diese Daten. Hierdurch verbleiben die Produktinformationen an den Orten, an denen sie initial erstellt wurden. Bei Änderungen der Informationen müssen eventuell redundante Informationen nicht nachgepflegt werden, da das Informationsmodell keine redundanten Informationen enthält. Die Erstellung eines Arbeitsablaufes entsteht immer auf Basis der aktuellen Informationen. Weiter kann die Erstellung der Informationen erheblich vereinfacht werden, da die Informationen nicht mehr in einzelnen monolithischen Dokumenten vorliegen, sondern direkt den entsprechenden Komponenten zugeordnet werden können. Hierdurch entfällt das getrennte manuelle Erstellen von z.B. Wartungs- und Servicedokumentationen, da diese direkt aus den z. B. während der Konstruktion erstellten Daten erzeugt oder z.B. parallel zur Konstruktion in das Informationsmodell eingepflegt werden können.

Das Verfahren eignet sich besonders zur kontextsensitiven Bereitstellung von Arbeitsanweisungen für den Anwender, insbesondere für die Durchführung von Service und Support von Maschinen und Anlagen. Die Definition von Arbeitsabläufen, so genannten Task Flows, ist ein effektives Mittel zur Unterstützung von Arbeitsprozessen. Insbesondere bei Montage-, Service- und Wartungstätigkeiten an beliebigen technischen Produkten kann mittels geeigneter, situationsbezogener Beschreibung hierdurch die Effektivität der Tätigkeit gesteigert werden.

In einer vorteilhaften Ausführung der Erfindung werden zur Bereitstellung der Produktinformationen für den Anwender folgende Verfahrensschritte durchgeführt:
- Durchsuchen des Informationsmodells nach den Kontext einer vom Anwender angeforderten Information betreffenden Gegenstandsbegriffen,
- Erzeugen einer Liste von Abfragen an das Informationsmodell entsprechend der betreffenden Gegenstandsbegriffe,
- Abfragen des Informationsmodells entsprechend der Liste zur Identifikation der betroffenen Referenzen und
- Adressieren der von den betroffenen Referenzen referenzierten, auf dem Datenverarbeitungssystem abgelegten Produktinformationen und Bereitstellung dieser Produktinformationen für den Anwender.

Um für den Anwender in einer bestimmten Arbeitssituation z. B. einen geeigneten Task Flow zu generieren, wird in einem ersten Schritt das Informationsmodell nach den Gegenstandsbegriffen durchsucht, die im Zusammenhang mit der zu bewältigende Aufgabe, der Arbeitssituation und der Qualifikation des Anwenders etc. stehen. Anschließend wird eine Liste erzeugt, in der nicht die eigentlichen Informationen (z. B. die Arbeitsschritte) abgelegt werden sondern lediglich die Abfragen, die über betreffende Gegenstandsbegriffe auf Informationen verweisen. Der Task Flow ist also an dieser Stelle in Form einer Liste von Abfragen an das Informationsmodell definiert. Dies hat den Vorteil, dass bei einer Änderung der eigentlichen Information der Task Flow weiterhin gültig und lauffähig ist.

Aus dem so generierte Task Flow können anschließend mit Hilfe der Verarbeitungseinheit die für den Anwender relevanten Produktinformationen von den verschiedenen Datenverarbeitungssystemen akquiriert werden. Hierzu werden die in der Liste abgelegten Abfragen an das Informationsmodell sequentiell oder parallel durchgeführt. Durch die damit verbundene Identifikation der betroffenen Gegenstandsbegriffe werden die benötigten Referenzen gefunden. Anhand der Referenzen werden die auf den Datenverarbeitungssystemen abgelegten Produktinformationen adressiert und dem Anwender schließlich zur Verfügung gestellt.

Der Vorteil des hier beschriebenen Verfahrens liegt darin, dass ein für eine Arbeitssituation notwendiger Arbeitsablauf nicht initial in einem eigenen Dokument und Format erstellt werden muss. Vielmehr werden erst zur Laufzeit die entsprechenden Abfragen an das Informationsmodell gestellt und der Arbeitsablauf aus Teilbeschreibungen zusammengestellt. Die eigentlichen Informationen werden nicht aus dem Modell herauskopiert. Stattdessen werden nur die notwendigen Abfragen erzeugt. Dieses hat den Vorteil, dass bei einer Änderung der Information eventuell redundante Informationen nicht nachgepflegt werden müssen, da das zugehörige Informationsmodell keine redundanten Daten enthält. Die Abarbeitung des Arbeitsablaufes erfolgt immer auf den aktuellen Informationen.

Um eine möglichst situationsgerechte und für den jeweiligen Anwender zugeschnittene Folge von Arbeitsanweisungen zu generieren, ist es vorteilhaft die Liste von Abfragen auf Basis des aktuellen Arbeitskontextes des Anwenders zu modifizieren, bevor das Abfragen des Informationsmodells entsprechend der Liste zur Identifikation der betroffenen Referenzen durchgeführt wird. Auf diese Art und Weise kann der aktuelle Arbeitskontext des Anwenders, wie z. B. seine Arbeitssituation, der Arbeitsfortschritt, seine Qualifikation oder von ihm eingesetzte Geräte mit bei der Erstellung der Folge von Arbeitsanweisungen berücksichtigt werden.

Insbesondere bei technischen Produkten im Bereich der Automatisierungstechnik sind oft dynamische Daten wie z. B. Prozesswerte bei der Bewältigung einer Arbeitsaufgabe mit zu berücksichtigen. Daher ist es von Vorteil, mit Hilfe des strukturierten Informationsmodells dynamische Daten, insbesondere Prozessdaten, zu adressieren. Solche Werte sind beispielsweise bei der Diagnose und Service, aber auch beim klassischen Bedienen und Beobachten von entscheidender Bedeutung. Die dynamischen Daten, die heute in der Regel von separaten und meist dezentralen Einrichtungen erfasst werden, werden in dieser erfindungsgemäßen Ausführungsform des Verfahrens mit den statischen Daten verknüpft und somit bei der Erstellung der für den Anwender relevanten Produktinformationen mit berücksichtigt.

Im Folgenden wird die Erfindung anhand der in den Figuren dargestellten Ausführungsbeispiele näher beschrieben und erläutert. Es zeigen:
- FIG 1: eine schematische Darstellung eines Verfahrens zur kontextsensitiven Bereitstellung von Produktinformationen,
- FIG 2: ein Ablaufszenario für ein Verfahren zur kontextsensitiven Bereitstellung einer Folge von Abfragen an das Informationsmodell und
- FIG 3: ein Ablaufszenario für ein Verfahren zur kontextsensitiven Bereitstellung einer Folge von Arbeitsanweisungen mit Hilfe des Informationsmodells und der Folge von Abfragen an das Informationsmodell.

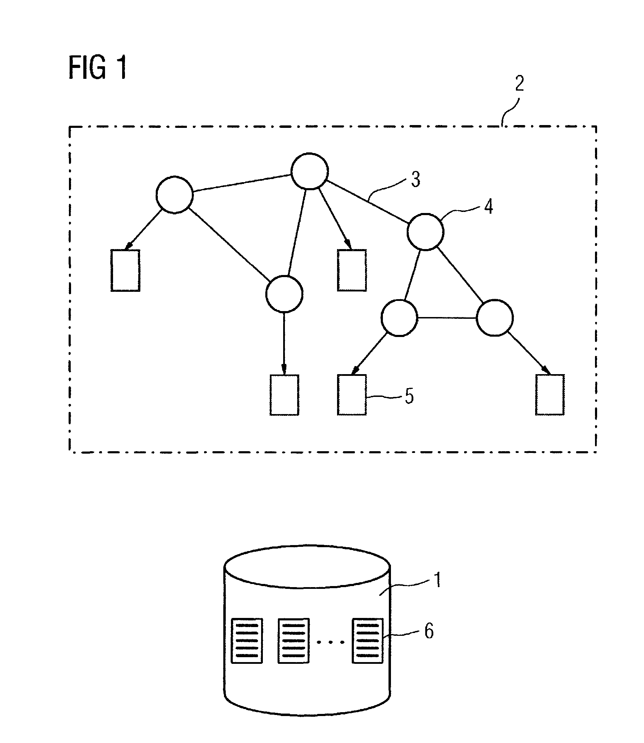

FIG 1 zeigt eine schematische Darstellung eines Verfahrens zur kontextsensitiven Bereitstellung von Produktinformationen 6 für einen Anwender. Innerhalb eines Informationsmodells 2 sind Gegenstandsbegriffe 4 abgelegt, die über Relationen 3 miteinander verknüpft sind. Relationen 3 sowie Gegenstandsbegriffe 4 basieren auf einer Ontologie, die beispielsweise eine unternehmensweite Gültigkeit aufweisen soll.

Mit den Gegenstandsbegriffen 4 sind weiterhin so genannte Referenzen 5 verknüpft, bei denen es sich um mit gewissen Metadaten angereicherte Verweise auf ein oder mehrere möglicherweise auch externe Datenverarbeitungssysteme 1 handelt. Auf dem Datenverarbeitungssystem 1 sind Produktinformationen 6 in Form von Dokumenten oder Teildokumenten abgelegt, die mit Hilfe der Referenzen 5 adressiert werden können.

Das semantische Netz ist beispielhaft als so genannte "Topic Map" ausgeführt. Der Topic Map Standard beinhaltet drei Basiselemente: Topics, die den oben genannten Gegenstandsbegriffen entsprechen, Associations, entsprechend der oben genannten Relationen zwischen den Gegenstandsbegriffen und Occurences, die den Referenzen auf die eigentlichen Produktinformationen entsprechen. Beispielsweise könnte es sich bei einem Topic um einen Vorschubantrieb, einen Motor oder eine Steuerung handeln und bei den Associations um eine Beziehung zwischen den Topics wie "ist Teil von", "besteht aus" oder "wird verursacht von".

Entsprechend eines aktuellen Kontextes des Anwender, zum Beispiel einer von ihm durchzuführenden Wartungsarbeit, werden automatisch die betroffenen Gegenstandsbegriffe 4 des Informationsmodells 2 und schließlich auch die relevanten Referenzen 5 selektiert. Anhand der Referenzen 5 werden die entsprechenden Dokumente bzw. Teildokumente 6 auf dem Datenverarbeitungssystem 1 adressiert und dem Anwender schließlich zur Verfügung gestellt.

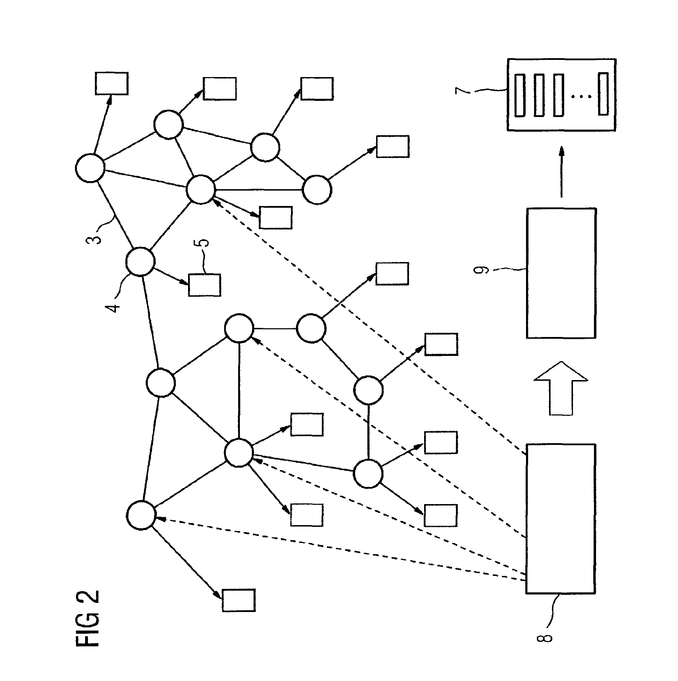

FIG 2 zeigt ein Ablaufszenario für ein Verfahren zur kontextsensitiven Bereitstellung einer Folge von Abfragen an das Informationsmodell 2. Das Szenario beschreibt die Erzeugung einer Liste von Abfragen an das Informationsmodell 2, anhand derer sich eine für einen Anwender in einer bestimmten Arbeitssituation geeignete Folge von Arbeitsanweisungen generieren lässt.

Der Anwender, beispielsweise ein Service-Techniker, befindet sich z. B. an einer Produktionsmaschine und möchte eine Wartung durchführen. Für die entsprechende Bedienung der Anlage können unterschiedliche Systeme zum Einsatz kommen wie das Bedienterminal der Anlage, ein Laptop, ein Handheld-PC, ein tragbarer Computer mit am Kopf getragenem Display inkl. Augmented Reality Unterstützung oder eine Kombination von diesen verschiedenen Elementen.

Zunächst fragt der Anwender hierzu mittels eines Wartungssystems eine Anleitung an. Um diese Anleitung quasi online zusammenzustellen, wird in einem Analyseschritt 8 das Informationsmodell 2 nach den Gegenstandsbegriffen 4 durchsucht, die einen Bezug zu den von der Wartung betroffenen Elementen der Produktionsanlage haben. Hierbei kann bereits der aktuelle Arbeitskontext des Anwenders mit berücksichtigt werden. In einem nachfolgenden Generationsschritt 9 wird die Liste von Abfragen an das Informationsmodell 7 erzeugt. Mit Hilfe dieser Liste 7 lassen sich anschließend die zu einer Erstellung einer Liste von Arbeitsschritten benötigten Referenzen 5 innerhalb des Informationsmodells 2 auffinden.

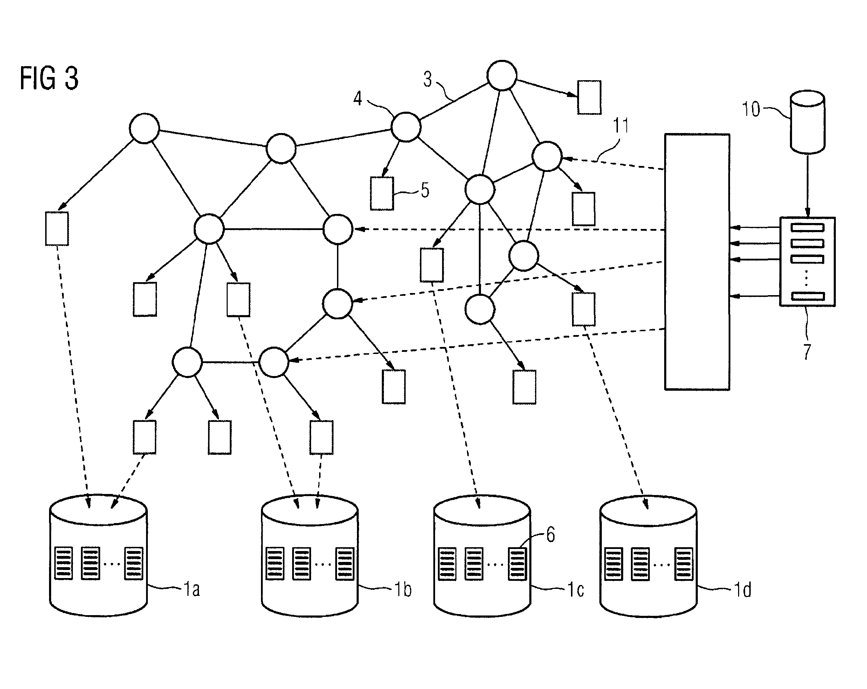

FIG. 3 zeigt ein Ablaufszenario für ein Verfahren zur kontextsensitiven Bereitstellung einer Folge von Arbeitsanweisungen mit Hilfe des Informationsmodells 2 und der Liste von Abfragen 7 an das Informationsmodell 2. Die Liste der Abfragen 7 an das Informationsmodell 2 wird zunächst in Abhängigkeit des Arbeitskontextes 10 des Anwenders modifiziert. Hierbei werden zum Beispiel seine Qualifikation, die von ihm eingesetzten Hilfsmittel bei der Wartung und der bereits erzielte Arbeitsfortschritt berücksichtigt.

Anschließend werden die einzelnen Abfragen der Liste sequentiell aufgelöst und Verweise 11 in das Informationsmodell 2 erzeugt. Über diese Verweise, die betroffenen Gegenstandsbegriffe 4 und deren mittels Relationen 3 realisierten Verknüpfungen untereinander werden schließlich die Referenzen 5 ermittelt, die die in verschiedenen Datenverarbeitungssystemen 1a-1d abgelegten und zur Beschreibung der Wartungsschritte benötigten Dokumente bzw. Teildokumente 6 adressieren. Mit Hilfe der Relationen 5 kann somit die Liste der Arbeitsanweisungen erzeugt werden, mit der der Anwender die geforderte Wartung der Anlage durchführen kann.

Über diesen Mechanismus wird keine vordefinierte Arbeitsschrittfolge aufgerufen. Stattdessen werden immer die entsprechend der aktuellen Situation benötigten Schritte zusammengestellt, wobei statische und ggf. auch dynamische Daten wie spezielle für die Wartung relevante Zustandswerte der Anlage berücksichtigt werden können. Es wird eine zielgerichtete Unterstützung des Benutzers erreicht. Dieses Vorgehen hat signifikante Vorteile gegenüber dem heute üblichen Einsatz einmalig erzeugter Dokumentationsunterlagen.

Zusammenfassend betrifft die Erfindung ein Verfahren und ein System zur kontextsensitiven Bereitstellung von auf einem oder mehreren Datenverarbeitungssystemen abgelegten Produktinformationen für einen Anwender. Um dem Anwender eines Produktes, beispielsweise einer technischen Anlage, automatisch die für ihn in Bezug auf seine aktuelle Arbeitssituation relevanten Produktinformationen zur Verfügung zu stellen wird ein Verfahren vorgeschlagen, bei dem in einem strukturierten Informationsmodell 2 den aktuellen Kontext einer vom Anwender angeforderten Information betreffende Gegenstandsbegriffe 4 automatisch gesucht werden, wobei die Gegenstandsbegriffe 4 innerhalb des Informationsmodells 2 zumindest teilweise über Relationen 3 miteinander verknüpft sind und wobei die Gegenstandsbegriffe 4 zumindest teilweise mit Referenzen 5 verknüpft sind, mit deren Hilfe die in dem aktuellen Kontext für den Anwender relevanten Produktinformationen 6 auf dem Datenverarbeitungssystem 1 adressiert und dem Anwender zur Verfügung gestellt werden.

## Patentansprüche

1. Verfahren zur kontextsensitiven Bereitstellung von Arbeitsanweisungen für einen Anwender, insbesondere für die Durchführung von Service und Support von Maschinen und Anlagen, mit folgenden Verfahrenschritten:
- Automatische Suche in einem auf einem Speichersystem abgelegten strukturierten Informationsmodell (2), welches als semantisches Netz aufgebaut ist und auf einer Ontologie basiert, nach den aktuellen Kontext einer vom Anwender angeforderten Information betreffenden Gegenstandsbegriffe (4) mit Hilfe einer Verarbeitungseinheit, wobei die Gegenstandsbegriffe (4) innerhalb des Informationsmodells (2) zumindest teilweise über Relationen (3) miteinander verknüpft sind,
- Erzeugen einer Liste von Abfragen an das Informationsmodell (2) entsprechend der betreffenden Gegenstandsbegriffe (4) mit Hilfe der Verarbeitungseinheit,
- Abfragen des Informationsmodells (2) entsprechend der Liste zur Identifikation betroffener Referenzen (5), wobei die Gegenstandsbegriffe (4) mit den Referenzen (5) verknüpft sind, und
- Adressieren von auf einem oder mehreren Datenverarbeitungssystemen (1) abgelegten Produktinformationen, die von den betroffenen Referenzen (5) referenziert werden, und Bereitstellung dieser Produktinformationen für den Anwender in Form einer Folge von Arbeitsanweisungen.

2. Verfahren nach Anspruch 1,
**dadurch gekennzeichnet, dass** die Liste von Abfragen auf Basis des aktuellen Arbeitskontextes des Anwenders modifiziert wird, bevor das Abfragen des Informationsmodells (2) entsprechend der Liste zur Identifikation der betroffenen Referenzen (5) durchgeführt wird.

3. Verfahren nach einem der Ansprüche 1 oder 2,
**dadurch gekennzeichnet, dass** mit Hilfe des strukturierten Informationsmodells (2) dynamische Daten, insbesondere Prozessdaten, adressiert werden.

4. System zur kontextsensitiven Bereitstellung von Arbeitsanweisungen für einen Anwender, insbesondere für die Durchführung von Service und Support von Maschinen und Anlagen, mit
- einem Speichersystem für ein strukturiertes Informationsmodell (2), welches als semantisches Netz aufgebaut ist und auf einer Ontologie basiert,
- einer Verarbeitungseinheit
- zur automatische Suche in dem strukturierten Informationsmodell (2) nach den aktuellen Kontext einer vom Anwender angeforderten Information betreffenden Gegenstandsbegriffe (4), wobei die Gegenstandsbegriffe (4) innerhalb des Informationsmodells (2) zumindest teilweise über Relationen (3) miteinander verknüpft sind, zur Erzeugung einer Liste von Abfragen an das Informationsmodell (2) entsprechend der betreffenden Gegenstandsbegriffe (4),
- zum Abfragen des Informationsmodells (2) entsprechend der Liste zur Identifikation betroffener Referenzen (5), wobei die Gegenstandsbegriffe (4) mit den Referenzen (5) verknüpft sind, und
zum Adressieren von auf einem oder mehreren Datenverarbeitungssystemen (1) abgelegten Produktinformationen, die von den betroffenen Referenzen (5) referenziert werden, und zur Bereitstellung dieser Produktinformationen für den Anwender in Form einer Folge von Arbeitsanweisungen.

5. System nach Anspruch 4,
**dadurch gekennzeichnet, dass** die Verarbeitungseinheit zur Modifikation der Liste von Abfragen auf Basis des aktuellen Arbeitskontextes des Anwenders vor dem Abfragen des Informationsmodells (2) entsprechend der Liste zur Identifikation der betroffenen Referenzen (5) vorgesehen ist.

6. System nach einem der Ansprüche 4 oder 5,
**dadurch gekennzeichnet, dass** das Speichermedium zur Speicherung von Adressen dynamischer Daten, insbesondere Prozessdaten, mit Hilfe des strukturierten Informationsmodells (2) vorgesehen ist.
